Europäisches Patentamt

European Patent Office

Office européen des brevets

(19)

(11) Veröffentlichungsnummer: **0 002 478**
B1

(12) **EUROPÄISCHE PATENTSCHRIFT**

(45) Veröffentlichungstag der Patentschrift: **26.01.83**

(21) Anmeldenummer: **78101537.5**

(22) Anmeldetag: **04.12.78**

(51) Int. Cl.³: **G 09 C 1/00, H 04 L 9/00, H 03 K 13/24**

(54) **Kryptogrammwandler.**

(30) Priorität: **16.12.77 CH 15514/77**

(43) Veröffentlichungstag der Anmeldung:
**27.06.79 Patentblatt 79/13**

(45) Bekanntmachung des Hinweises auf die Patenterteilung:
**26.01.83 Patentblatt 83/4**

(84) Benannte Vertragsstaaten:
**CH**

(56) Entgegenhaltungen:
**DE - C - 1 914 890**

(73) Patentinhaber: **GRETAG Aktiengesellschaft
Althardstrasse 70
CH-8105 Regensdorf (CH)**

(72) Erfinder: **Widmer, Walter Rudolf
Langackerweg 12
CH-8155 Niederhasli (CH)**
Erfinder: **Baschong, Marcel
Goffersbergweg 212
CH-5603 Staufen (CH)**

(74) Vertreter: **Pirner, Wilhelm et al,
Patentabteilung der CIBA-GEIGY AG Postfach
CH-4002 Basel (CH)**

## Kryptogrammwandler

Die Erfindung betrifft einen Kryptogrammwandler zur eineindeutigen Umwandlung von in einem 7-Bit-Code vorliegenden Zeichen eines 128 Zeichen umfassenden ersten Alphabets in in einem 5-Bit-Code vorliegende Zeichen eines 26 Zeichen umfassenden zweiten Alphabets und umgekehrt, mit einem Hinwandlerteil und einem Rückwandlerteil mit einem Eingang und einem Ausgang.

In der Chiffriertechnik wird oft verlangt, dass das Chiffrat bzw. das Kryptogramm nur aus den 26 Buchstaben des gewöhnlichen Alphabets zusammengesetzt ist. Im allgemeinen umfasst der Zeichenvorrat, der für den Klartext verwendet werden darf, jedoch wesentlich mehr als nur 26 Zeichen—neben dem ganzen Grossbuchstaben-Alphabet werden noch Ziffern und Sonderzeichen und eventuell sogar noch Kleinbuchstaben verwendet (7-Bit-Code, Internationales Alphabet Nr. 5, ASCII). Die Aufgabe eines Kryptogrammwandlers besteht nun darin, einen Text, der alle Zeichen eines ausgedehnteren Vorrats enthalten kann, in eineindeutiger Weise in einen Text umzuwandeln, der nur Zeichen eines beschränkteren Vorrats, insbesondere nur Buchstaben, enthält.

Eine weit verbreitete Methode zur Erweiterung bzw. Komprimierung des Zeichenvorrats besteht in der Verwendung von Umschaltzeichen. Dabei sind zwei Varianten zu unterscheiden. Die erste, hauptsächlich in der Fernschreibtechnik gebräuchliche Variante bedient sich der beiden Sonderzeichen "Ziffern" und "Buchstaben", wobei die Erweiterung des Zeichenvorrats jeweils für alle auf ein Umschaltzeichen (Ziffern) bis zum nächsten Rückschaltzeichen (Buchstaben) folgenden Zeichen gilt. Die zweite Variante ist insbesondere in der Chiffriertechnik zu finden und wird bei den bisher bekannten Kryptogrammwandlern verwendet. Bei dieser Variante wird ein Zeichen, z.B. das "Q", des 26-eralphabets als Umschaltzeichen reserviert. Die Umschaltung gilt dabei jeweils nur für das dem Umschaltzeichen unmittelbar folgende Zeichen.

Die erste Verfahrensvariante besitzt bei normalem Text, d.h. wenn längere Sequenzen des einen bzw. des anderen Zeichenvorrats vorkommen, einen relativ guten Wirkungsgrad, ist aber störempfindlich und für Zufallstexte (Chiffrate) praktisch ungeeignet. Ausserdem ist das Verhältnis der Länge des ursprünglichen Textes zu der des gewandelten Textes vom Text selbst abhängig. Die zweite Variante hat nur dann einen guten Wirkungsgrad, wenn die Anzahlen der Zeichen der beiden gegenseitig ineinander umzuwandelnden Zeichenvorräte sich nur wenig unterscheiden, also nur relativ selten umgeschaltet werden muss. Das Textlängenverhältnis ist auch bei dieser Verfahrensvariante nicht konstant sondern textabhängig.

Aufgabe der Erfindung ist einen Kryptogrammwandler der eingangs definierten Art zu schaffen, der einen hohen Wirkungsgrad und eine geringe Störempfindlichkeit besitzt und bei dem ausserdem das Textlängenverhältnis vom zu wandelnden Text unabhängig ist. Der dieser Aufgabe gerecht werdende Kryptogrammwandler ist erfindungsgemäss durch die im Anspruch 1 angegebenen Merkmale gekennzeichnet.

Der erfindungsgemässe Kryptogrammwandler erzeugt also aus jeweils zwei Zeichen z.B. des ASCII-Codes drei Buchstaben und umgekehrt.

Die Zuordnung einer Zweierkombination des 128-er Alphabets zu einer bestimmten Dreierkombination des 26-er Alphabets könnte im Prinzip anhand einer z.B. durch einen Speicher realisierten elektronischen Tabelle erfolgen. Eine solche Tabelle müsste aber wegen der sehr hohen Anzahl der möglichen Zeichenkombination (128×128) sehr umfangreich sein, sodass diese Möglichkeit für die Praxis weniger gut geeignet ist. Der erfindungsgemäße Kryptogrammwandler umfaßt daher Mittel, welche die jeweils drei Zeichen des zweiten Alphabets aus den jeweils zwei Zeichen des ersten Alphabets bzw. umgekehrt anhand bestimmter Gesetzmässigkeiten jeweils neu ableiten.

Im folgenden wird die Erfindung anhand der Zeichnung näher erläutert. Es zeigen:

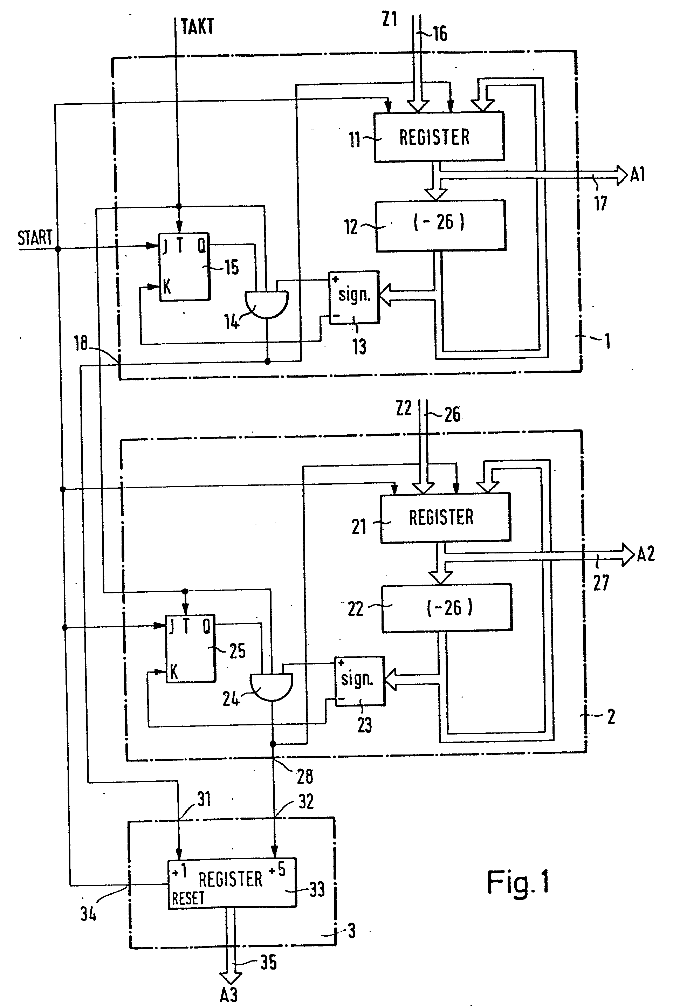

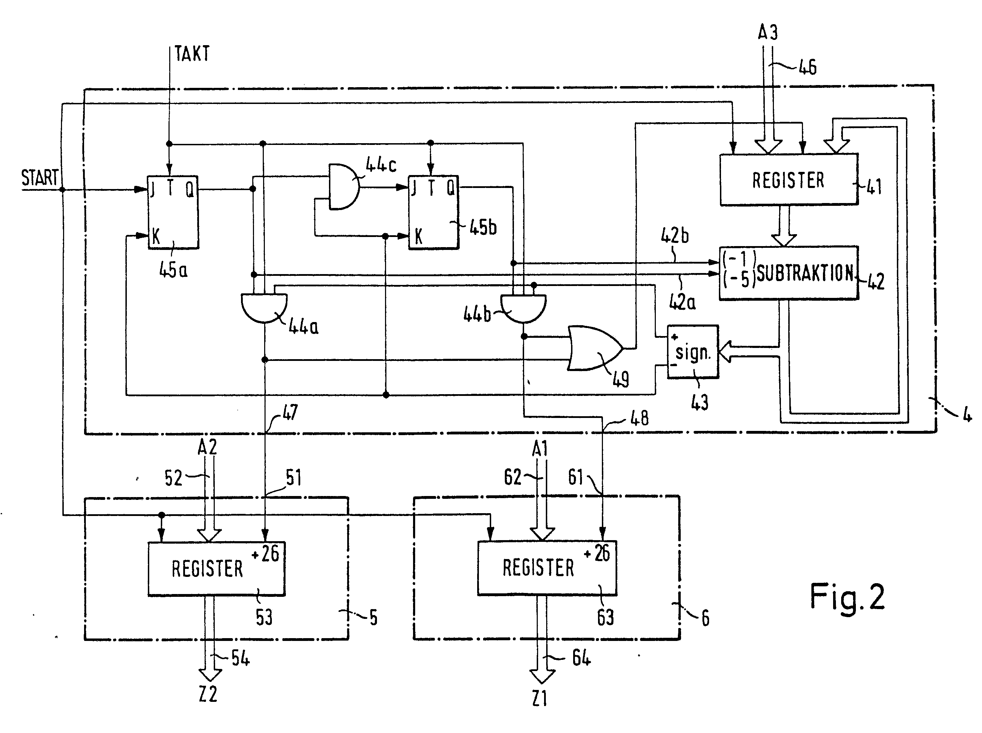

Fig. 1 und 2 ein Blockschaltbild des Hin- und des Rückwandlungsteil eines Ausführungsbeispiels des erfindungsgemässen Kryptogrammwandlers.

Der in Figur 1 dargestellte Hinwandlungsteil des Kryptogrammwandlers, welcher aus je zwei ASCII-Zeichen (0...127) drei Buchstabenzeichen (0...25) bildet, umfasst im wesentlichen drei Schaltkreise 1, 2 und 3. Die beiden ersten Schaltkreise 1 und 2 sind identisch aufgebaut und umfassen je ein Register 11 bzw 21, eine Subtrahierstufe 12 bzw 22, einen Vorzeichendetektor 13 bzw 23, ein Und-Tor 14 bzw 24 und ein JK-Flip-Flop 15 bzw 25. Ferner sind die beiden Schaltkreise mit je einem Dateneingang 16 bzw 26, einem Datenausgang 17 bzw 27, einem weiteren, zu Eingängen 31 bzw. 32 führenden Ausgang 18 bzw 28 sowie nicht näher bezeichneten Eingängen für einen gemeinsamen Takt sowie ein Startsignal versehen. Der dritte Schaltkreise 3 umfasst lediglich ein Addierregister 33, mit den bereits genannten Eingängen 31 und 32, einen Reset-Eingang 34 und einen Datenausgang 35.

Die Umwandlung der jeweils zwei ASCII-Zeichen $Z1$ und $Z2$ in die jeweils drei Buchstaben $A1$, $A2$ und $A3$ erfolgt dadurch, dass die beiden Zeichen $Z1$ und $Z2$ als Zahlen interpretiert und je durch 26 dividiert werden. Die grössten ganzzahligen Vielfachen $Q_1$ und $Q_2$ von 26 in $Z1$ und $Z2$ werden dann mit 1 bzw 5 multipliziert und die Produkte addiert. Die bei den Divisionen anfallenden Reste ergeben die ersten beiden Buchstaben A1 bzw A2 und die Produktsumme das dritte Zeichen A3. Formelmässig lässt sich dies wie folgt veranschaulichen:

$$Z1 = Q_1 \times 26 + A1$$
$$Z2 = Q_2 \times 26 + A2$$
$$A3 = Q_2 \times 5 + Q_1$$

Die Vielfachen $Q_1$ und $Q_2$ können, wie leicht einzusehen ist, den Wert 4 nicht überschreiten.

Die Rückwandlung erfolgt analog. Zunächst wird $Q_2$ durch Division als grösstes ganzzahliges Vielfaches von 5 in A3 und $Q_1$ als Rest dieser Division ermittelt. $Q_1$ und $Q_2$ werden dann je mit 26 multipliziert und zu A1 bzw. A2 addiert, wobei die Summen dann Z1 und Z2 ergeben.

Der vorstehend beschriebene Wandler funktioniert wie folgt:Auf einen irgenwie gegebenen Startimpuls werden die Register 11 und 21 mit den beiden Zeichen Z1 und Z2 des ASCII-Alphabets geladen, das Addierregister 33 gelöscht und die Flip-Flops 15 und 25 gesetzt. Mit jedem Taktimpuls werden nun in den Subtrahierstufen 12 und 22 die Differenzen zwischen den jeweiligen Inhalten der Register 11 und 21 und der Zahl 26 gebildet, die Vorzeichen dieser Differenzwerte in den Vorzeichendetektoren 13 bzw. 23 überprüft und, solange die Vorzeichen positiv sind, die Differenzwerte anstelle der ursprünglichen Inhalte in die Register 11 bzw. 21 geladen. Gleichzeitig wird mit jedem Taktimpuls, der über die UND-Tore 14 bzw. 24 an die Steuereingänge 31 bzw. 32 des Addierregisters 33 gelangt, dessen Inhalt um 1 bzw. 5 bzw. bei gleichzeitigem Eintreffen der Taktimpulse auf beiden Eingängen um 6 erhöht.

Sobald das Vorzeichen der Differenzwerte in dem einen und/oder anderen der beiden Schaltkreise 1 und 2 negativ wird, setzt der Vorzeichendetektor 13 bzw. 23 das betreffende Flip-Flop 15 bzw. 25 zurück und sperrt dadurch das UND-Tor 14 bzw. 24, sodass kein Taktimpuls mehr auf den betreffenden Eingang des Addierregisters 33 und zum betreffenden Register 11 bzw. 21 gelangen kann. Letzteres verhindert, dass der nun negative Differenzwert in das betreffende Register geladen wird.

Die Anzahl der an das Addierregister 33 über die Und-Tore 14 bzw. 24 abgegebenen Taktimpulse entspricht somit den grössten ganzzahligen Vielfachen $Q_1$ und $Q_2$ von 26 in Z1 bzw. Z2, und die Endinhalte der Register 11 und 21 stellen die dabei verbliebenen Reste und damit zwei der drei neuen Zeichen A1—A3 dar. Das dritte Zeichen A3 ist durch den Schlussinhalt des Addierregisters gegeben.

Beim vorliegenden Ausführungsbeispiel ist die Ermittlung der ganzzahligen Vielfachen von 26 durch eine zyklisch arbeitende Subtrahierschaltung realisiert. Selbstverständlich wäre auch eine echte Dividierschaltung möglich. Die Realisierung mittels fortgesetzter Subtraktion bietet jedoch schaltungstechnische Vorteile.

Fig. 2 zeigt den Rückwandlungsteil des Kryptogrammwandlers, welcher aus je drei Buchstaben A1, A2 und A3 zwei ASCII-Zeichen Z1 und Z2 zurückgewinnt und im wesentlichen ebenfalls drei Schaltkreise 4, 5 und 6 umfasst. Der Schaltkreis 4 enthält ein Register 41, eine über zwei Eingänge 42a und 42b auf Subtraktion 5 bzw. Subtraktion 1 einstellbare Subtrahierstufe 42, einen Vorzeichendetektor 43, drei Und-Tore 44a, 44b und 44c zwei Flip-Flops 45a und 45b und ein Oder-Tor 49. Ferner ist der Schaltkreise 4 mit einem Dateneingang 46 und zwei Steuerausgängen 47 und 48 versehen, welch letztere an je einen Steuereingang 51 bzw. 61 der Schaltkreise 5 und 6 führen. Ausserdem ist ein nicht näher bezeichneter Eingang für einen Takt sowie ein Starteingang vorgesehen. Die Schaltkreise 5 und 6 sind identisch aufgebaut und bestehen je aus einem Addierregister 53 bzw. 63 mit einem Dateneingang 52 bzw. 62 und einem Datenausgang 54 bzw. 64 sowie nicht bezeichneten Setzeingängen.

Die Rückwandlung A1, A2, A3→Z1, Z2 wird mit einem irgendwie erzeugten Startimpuls eingeleitet. Mit diesem Impuls werden die Register 53 und 63 über die Dateneingänge 52 bzw. 62 mit den beiden Buchstabenwerten A2 und A1 geladen, das Flip-Flop 45 a gesetzt und damit die Subtrahierstufe 42 auf Subtraktion 5 geschaltet und der Buchstabenwert A3 in das Register 41 geladen. Mit jedem Taktimpuls, der über das Und-Tor 44a und das Oder-Tor 49 zum Register 41 gelangt, wird dann in der Subtrahierstufe 42 die Differenz zwischen dem momentanen Inhalt des Registers 41 und der Zahl 5 gebildet, das Vorzeichen dieses Differenzwertes vom Vorzeichendetektor 43 überprüft und bei positivem Vorzeichen dieser Differenzwert anstelle des ursprünglichen Inhalts in das Register 41 geladen. Gleichzeitig wird über das Und-Tor 44a ein Taktimpuls an den Eingang 51 des Addierregisters 53 abgegeben, wodurch sich dessen Inhalt jeweils um 26 erhöht.

Sobald das Vorzeichen des in der Subtrahierstufe 42 gebildeten Differenzwertes negativ wird, setzt der Vorzeichendetektor 43 das Flip-Flop 45a zurück und setzt gleichzeitig über das Und-Tor 44c das Flip-Flop 45b. Dadurch werden die Subtrahierstufe 42 auf Subtraktion 1 umgeschaltet, das Und-Tor 44a gesperrt und das Und-Tor 44b geöffnet. Mit jedem neuen Taktimpuls wird nun in gleicher Weise der Inhalt des Registers 41 um jeweils 1 verringert. Gleichzeitig wird der Inhalt des Addierregisters 63 um jeweils 26 erhöht. Wenn die Differenz negativ wird, setzt der Vorzeichendetektor 43 auch das Flip-Flop 45b zurück und beendet damit die Wandlung. Die Anzahl der den Registern 53 und 63 zugeführten Taktimpulse entspricht dem grössten Vielfachen der Zahl 5 bzw. dem Rest in A3 und damit, wie weiter oben gezeigt wurde, den Werten $Q_2$ bzw. $Q_1$. Die Eininhalte der Addierregister 53 und 63 stellen somit die rückgewandelten Zeichen Z1 bzw. Z2 des ASCII-Alphabets dar.

Selbstverständlich ist es auch bei der Rückwandlung möglich, die ganzzahligen Vielfachen $Q_1$ und $Q_2$ durch direkte Division anstatt durch fortgesetzte Subtraktion zu erhalten. Ueberhaupt ist die schaltungstechnische Realisierung des Kryptogrammwandlers von untergeordneter Bedeutung, wesentlich ist vor allem, dass jeweils zwei Zeichen des umfassenderen Zeichenvorrats in drei Zeichen des beschränkteren Vorrats umgewandelt werden. So lässt sich der erfindungsgemässe Kryptogrammwandler z.B. auch sehr elegant und vorteilhaft mittels eines Prozessrechners oder Mikrocomputers realisieren.

## Patentansprüche

1. Kryptogrammwandler zur eineindeutigen Umwandlung von in einem 7-Bit-Code vorliegenden Zeichen eines 128 Zeichen umfassenden ersten Alphabets in in einem 5-Bit-Code vorliegende Zeichen eines 26 Zeichen umfassenden zweiten Alphabets und umgekehrt, mit einem Hinwandlerteil (1—3) und einem Rückwandlerteil (4—6) mit einem Eingang und einem Ausgang dadurch gekennzeichnet, dass der Hinwandlerteil (1—3) über seinen Eingang (16, 26) jeweils zwei Zeichen ($Z_1$, $Z_2$) des ersten Alphabets einliest und aus diesen jeweils zwei Zeichen jeweils drei Zeichen ($A_1$, $A_2$, $A_3$) des zweiten Alphabets bildet und über seinen Ausgang (17, 27, 35) abgibt, und dass der Rückwandlerteil (4—6) über seinen Eingang (46, 52, 62) jeweils drei Zeichen ($A_1$, $A_2$, $A_3$) des zweiten Alphabets einliest und aus diesen jeweils drei Zeichen jeweils zwei Zeichen ($Z_1$, $Z_2$) des ersten Alphabets bildet und über seinen Ausgang (54, 65) abgibt.

2. Wandler nach Anspruch 1, dadurch gekennzeichnet, dass die beiden Wandlerteile (1—3, 4—6) die Zeichen des Zielalphabets bei jedem Wandlungsvorgang aus den Zeichen des Ausgangsalphabets nach vorgegebenen, der Wandlung zugrundeliegenden Gesetzmässigkeiten neu berechnen.

3. Wandler nach Anspruch 2, dadurch gekennzeichnet, dass der Hinwandlerteil Elemente (1—3) aufweist, welche die beiden Zeichen ($Z_1$, $Z_2$) des ersten Alphabets je durch 26 dividieren und die dabei anfallenden Reste als die beiden ersten Zeichen ($A_1$, $A_2$) des zweiten Alphabets ausgeben und welche Elemente eines der bei den beiden Divisionen anfallenden ganzzahligen Vielfachen von 26 ($Q_2$) mit 5 multiplizieren, das Produkt zum anderen ganzzahligen Vielfachen von 26 ($Q_1$) addieren und die sich dabei ergebende Summe als drittes Zeichen ($A_3$) des zweiten Alphabets ausgeben, und dass der Rückwandlerteil Elemente (4—6) aufweist, welche aus dem dritten der drei Zeichen ($A_1$, $A_2$, $A_3$) des zweiten Alphabets das grösste ganzzahlige Vielfache von 5 ($Q_2$) sowie den dabei anfallenden Rest ($Q_1$) bilden und welche das genannte Vielfache von 5 und den Rest je mit 26 multiplizieren, zu den Produkten das erste bzw. das zweite der drei Zeichen ($A_1$, $A_2$, $A_3$) des zweiten Alphabets hinzuaddieren und die beiden so gebildeten Summen als die beiden Zeichen ($Z_1$, $Z_2$) des ersten Alphabets ausgeben.

4. Wandler nach Anspruch 3, dadurch gekennzeichnet, dass die Elemente des Hinwandlerteils drei Schaltkreise (1—3) umfassen, wovon ein erster und ein zweiter je einen binär codierten Eingang (16, 26) für ein erstes bzw. zweites Zeichen ($Z_1$, $Z_2$) des ersten Alphabets sowie je einen binär codierten Ausgang (17, 27) für ein erstes bzw. ein zweites Zeichen ($A_1$, $A_2$) des zweiten Alphabets sowie je einen weiteren Ausgang (18, 28) aufweisen, welche mit je einem Eingang (31, 32) des dritten Schaltkreises (3) verbunden sind, dass der erste und der zweite Schaltkreis (1, 2) aus den ihren Eingängen (16, 26) zugeführten binär codierten Zeichen jeweils das grösste ganzzahlige Vielfache von 26 bilden, an den dritten Schaltkreis (3) weitergeben und die dabei auftretenden Reste als erstes bzw. zweites Zeichen des zweiten Alphabets an ihren betreffenden Ausgang (17, 27) abgeben, und dass der dritte Schaltkreis (3) das Vielfache des zweiten Schaltkreises mit 5 multipliziert, zum Vielfachen des ersten Schaltkreises addiert und die Summe als drittes Zeichen ($A_3$) des zweiten Alphabets an einen dafür vorgesehenen binär codierten Ausgang (35) abgibt.

5. Wandler nach Anspruch 4, dadurch gekennzeichnet, dass die Elemente des Rückwandlerteils einen vierten, fünften und sechsten Schaltkreis (4—6) umfassen, wobei der vierte (4) einen binär codierten Eingang (46) für das jeweils dritte Zeichen ($A_3$) des zweiten Alphabets und zwei mit je einem Eingang (51, 61) des fünften und sechsten Schaltkreises (5, 6) verbundene Ausgänge (47, 48) aufweist und der fünfte und sechste Schaltkreis (5, 6) je einen weiteren binär codierten Eingang (52, 62) für das jeweils erste bzw. zweite Zeichen ($A_1$, $A_2$) des zweiten Alphabets sowie je einen binär codierten Ausgang (54, 64) für das jeweils erste bzw. zweite Zeichen (71, 72) des ersten Alphabets besitzen, dass der vierte Schaltkreis (4) aus jedem seinem Eingang (6) zugeführten dritten Zeichen des zweiten Alphabets das grösste ganzzahlige Vielfache von 5 bildet und dem fünften Schaltkreis (5) zuführt sowie den verbleibenden Rest dem sechsten Schaltkreis (6) zuführt, und dass der fünfte und der sechste Schaltkreis zu jedem ihren Eingängen (52, 62) zugeführten ersten bzw. zweiten Zeichen ($A_1$, $A_2$) des zweiten Alphabets ein dem Rest bzw. dem genannten grössten Vielfachen entsprechendes Vielfaches von 26 hinzuaddieren und die Summe als erstes bzw. zweites Zeichen ($Z_1$, $Z_2$) des ersten Alphabets an ihren Ausgang (54—64) abgeben.

6. Wandler nach Anspruch 4, dadurch gekennzeichnet, dass der erste und der zweite Schaltkreis (1, 2) die grössten ganzzahligen Vielfachen von 26 durch fortgesetzte Subtraktionen der Zahl 26 bilden.

7. Wandler nach Anspruch 5, dadurch gekennzeichnet, dass der vierte Schaltkreis (4) das grösste ganzzahlige Vielfache von 5 durch fortgesetzte Subtraktion der Zahl 5 bildet.

8. Wandler nach Anspruch 6, dadurch gekennzeichnet, dass der erste und der zweite Schaltkreis (1, 2) je einen Speicher (11, 21) für das erste bzw. zweite Zeichen ($Z_1$, $Z_2$) des ersten Alphabets, eine Schaltung (12, 22) zur Bildung der Differenz zwischen dem Speicherinhalt und 26, eine Schaltung (13, 23) zur Ueberprüfung des Vorzeichens der Differenz und zur Erzeugung eines Signals bei positivem Vorzeichen und eine von der Ueberprüfungsschaltung nur bei positivem Vorzeichen aktivierte Schaltung (14, 15, 24, 25) zum Dekrementieren des Speicherinhalts um 26 enthalten.

9. Wandler nach Anspruch 7, dadurch gekennzeichnet, dass der vierte Schaltkreis (4) einen Speicher (41) für das jeweils dritte Zeichen ($A_3$) des zweiten Alphabets, eine umschaltbare Schaltung (42) zur Bildung der Differenzen zwischen dem Speicherinhalt und 5 bzw. 1, eine Schaltung (43) zum Ueberprüfen des Vorzeichens dieser Differenz und zur Erzeugung eines ersten bzw. zweiten Signals bei positiven Vorzeichen, eine von der Ueberprüfungsschaltung nur bei positivem Vorzeichen aktivierte Schaltung (44, 45, 49) zum Dekrementieren des Speicherinhalts um 5 bzw. 1, und eine von der Vorzeichenüberprüfungsschaltung bei negativem Vorzeichen aktivierte Schaltung (44, 45) zum Umschalten der Differenzbildungsschaltung (42) von Subtraktion 5 auf Subtraktion 1 umfasst.

## Claims

1. A cryptogram convertor for unambiguously converting characters of a first 128-character alphabet, said characters being in the form of a 7-bit code, into characters of a second 26-character alphabet, said latter characters being in the form of a 5-bit code, and *vice versa*, comprising a conversion stage (1—3) and a reconversion stage (4—6) with one input and one output, characterised in that the conversion stage (1—3) reads in pairs of characters ($Z_1$, $Z_2$) of the first alphabet via its input (16, 26) and from each pair of characters forms and delivers via its output (17, 27, 35) three characters ($A_1$, $A_2$, $A_3$) of the second alphabet, and the reconversion stage (4—6) reads in three characters ($A_1$, $A_2$, $A_3$) of the second alphabet via its input (46, 52, 62) and from each three characters forms and delivers via its output (54, 64) a pair of characters ($Z_1$, $Z_2$) of the first alphabet.

2. A convertor according to Claim 1, characterised in that the two conversion stages (1—3, 4—6) re-compute the characters of the target alphabet from the characters of the source alphabet during each conversion operation in accordance with predetermined laws forming the basis for the conversion.

3. A convertor according to Claim 2, characterised in that the conversion stage comprises elements (1—3) which divide the two characters ($Z_1$, $Z_2$) of the first alphabet by 26 in each case and output the remainders as the first two characters ($A_1$, $A_2$) of the second alphabet and which elements multiply by 5 one of the integral multiples of 26 ($Q_2$) occurring during the two divisions, add the product to the other integral multiple of 26 ($Q_1$) and output the resulting sum as the third character ($A_3$) of the second alphabet, and in that the reconversion stage comprises elements (4—6) which from the third of the three characters ($A_1$, $A_2$, $A_3$) of the second alphabet form the largest integral multiple of 5 ($Q_2$) and the resulting remainder ($Q_1$) and which multiply the said integral by 5 and the remainder by 26 in each case, add the first and the second of the three characters ($A_1$, $A_2$, $A_3$) of the second alphabet to the products, and output the two resulting sums as the two characters ($Z_1$, $Z_2$) of the first alphabet.

4. A convertor according to Claim 3, characterised in that the elements of the conversion stage comprise three circuits (1—3) of which a first and a second circuit each contain a binary coded input (16, 26) for a first and second character ($Z_1$, $Z_2$) respectively of the first alphabet and a binary coded output (17, 27) for a first and second character ($A_1$, $A_2$) respectively of the second alphabet, and an additional output (18, 28) connected to a respective input (31, 32) of the third circuit (3), the first and the second circuit (1, 2) form in each case from the binary coded characters fed to their inputs (16, 26) the largest integral multiple of 26, convey the same to the third circuit (3) and deliver the resulting remainders as the first and second characters of the second alphabet to their corresponding output (17, 27) and the third circuit (3) multiples the multiple of the second circuit by 5, adds it to the multiple of the first circuit and delivers the sum as the third character ($A_3$) of the second alphabet to a binary coded output (35) provided for the purpose.

5. A convertor according to Claim 4, characterised in that the elements of the reconversion stage comprise a fourth, fifth and sixth circuit (4—6), the fourth (4) having a binary coded input (46) for each third character ($A_3$) of the second alphabet and two outputs (47, 48) each connected to an input (51, 61) of the fifth and sixth circuits (5, 6), and the fifth and sixth circuit (5, 6) each have an additional binary coded input (52, 62) for the first and second character ($A_1$, $A_2$) respectively of the second alphabet and each have a binary coded output (54, 64) for the first and second characters (71, 72) respectively of the first alphabet, the fourth circuit (4) forms from each third character of the second alphabet fed to its input (6) the largest integral multiple of 5 and feeds it to the fifth circuit (5) and feeds the resulting remainder to the sixth circuit (6), and the fifth and sixth circuit add a multiple of 26 corresponding to the remainder or to the said largest multiple to each first and second character ($A_1$, $A_2$) respectively of the second alphabet fed to each of their inputs (52, 62), and output the sum as the first and second character ($Z_1$, $Z_2$) of the first alphabet at their output (54, 65).

6. A convertor according to Claim 4, characterised in that the first and second circuits (1, 2) form the largest integral multiple of 26 by repeated subtraction of the number 26.

7. A converter according to Claim 5, characterised in that the fourth circuit (4) forms the largest integral multiple of 5 by repeated subtraction of the number 5.

8. A convertor according to Claim 6, characterised in that the first and second circuits (1, 2) each contain a store (11, 21) for the first and second characters ($Z_1$, $Z_2$) respectively of the first alphabet, a circuit (12, 22) for forming the difference between the store contents and 26, a circuit (13, 23) for checking the sign of the difference and for generating a signal in the case of a positive sign, and a circuit (14, 15, 24, 25) which is activated by the checking circuit only in the event of a positive sign, to reduce the store content by 26.

9. A converter according to Claim 7, characterised in that the fourth circuit (4) comprises a store (41) for each third character ($A_3$) of the second alphabet, a switchable circuit (42) for forming the differences between the store content and 5 and 1 respectively, a circuit (43) for checking the sign of this difference and for generating a first and second signal in the case of a positive sign, a circuit (44, 45, 49) activated by the checking circuit only in response to a positive sign for reducing the store content by 5 and 1 respectively, and a circuit (44, 45) activated by the sign checking circuit in response to a negative sign for switching the subtraction circuit (42) from subtraction 5 to subtraction 1.

## Revendications

1. Appareil de translittération cryptographique pour convertir de façon univoque un signe représenté par un code à sept bits appartenant à un premier alphabet comprenant 128 signes en un signe représenté par un code à cinq bits d'un second alphabet comprenant 26 signes et inversement, qui comprend une section de conversion dans le sens aller (1—3) et une section de conversion dans le sens retour (4—6) ayant une entrée et une sortie; appareil caractérisé en ce que par son entrée (16, 26) la section de conversion aller (1—3) lit respectivement deux signes ($Z_1$, $Z_2$) du premier alphabet et forme, à partir de ceux-ci respectivement trois signes ($A_1$, $A_2$, $A_3$) du second alphabet et les délivre par sa sortie (17, 27, 35), et en ce que la section de conversion de retour (4—6) lit respectivement par son entrée (46, 52, 62) trois signes ($A_1$, $A_2$, $A_3$) du second alphabet et forme, à partir de ceux-ci deux signes ($Z_1$, $Z_2$) du premier alphabet et les délivre par sa sortie (54, 64).

2. Appareil selon la revendication 1, caractérisé en ce que les deux sections de conversion (1—3, 4—6) recalculent, selon des lois prédéterminées, qui sont à la base de la conversion, les signes de l'alphabet d'arrivée à partir des signes de l'alphabet de départ, à chaque opération de conversion.

3. Appareil selon la revendication 2, caractérisé en ce que la section de conversion aller comprend des éléments (1—3) qui divisent respectivement les deux signes ($Z_1$, $Z_2$), du premier alphabet par 26 et qui délivrent les restes résultant de ces divisions en tant que les deux premiers signes ($A_1$, $A_2$) du second alphabet, lesdits éléments dans le cas où le quotient des deux divisions se trouve être un multiple entier de 26 ($Q_2$) multiplient par 5 l'un d'entre eux et additionnent le produit ainsi obtenu à l'autre multiple entier de 26 ($Q_1$), en délivrant la somme résultante en tant que troisième signe ($A_3$) du second alphabet, et en ce que la section de conversion de retour comprend des éléments (4—6) qui forment, à partir du troisième des signes ($A_1$, $A_2$, $A_3$) du second alphabet, le plus grand multiple entier de 5 ($Q_2$) ainsi que le reste correspondant ($Q_1$) et qui multiplient respectivement le multiple en question de 5 et ledit reste respectivement par 26, additionnent aux produits le premier et le second des trois signes ($A_1$, $A_2$, $A_3$) du second alphabet et qui délivrent les sommes ainsi formées en tant que les deux signes ($Z_1$, $Z_2$) du premier alphabet.

4. Appareil selon la revendication 3, caractérisé en ce que les éléments de la section de conversion aller comprennent trois circuits (1—3) dont le premier et le second comprennent respectivement une entrée binaire (16, 26) pour un premier ou un second signe ($Z_1$, $Z_2$) du premier alphabet, ainsi que, respectivement une sortie binaire (17, 27) pour un premier ou un second signe ($A_1$, $A_2$) du second alphabet, ainsi qu'une autre sortie (18, 28), qui sont reliées respectivement à l'une des entrées (31, 32) du troisième circuit (3), en ce que le premier et le second circuits (1, 2) forment, à partir des signes codés en binaire qui sont appliqués à leurs entrées (16, 26), respectivement le plus grand multiple entier de 26, le transmettent au troisième circuit (3) et délivrent les restes résultants en tant que premier et second signes du second alphabet à leur sortie respective (17, 27), et en ce que le troisième circuit (3) multiplie par 5 le multiple du second circuit, l'additionne au multiple du premier circuit et délivre la somme ainsi obtenue en tant que troisième signe ($A_3$) du second alphabet à une sortie binaire (35) prévue à cette fin.

5. Appareil selon la revendication 4, caractérisé en ce que les éléments de la section de conversion de retour comprennent des quatrième, cinquième et sixième circuits (4—6), le quatrième (4) comprenant une entrée binaire (46) recevant chacun des troisièmes signes ($A_3$) du second alphabet et deux sorties (47, 48) reliées respectivement à l'une des entrées (51, 61) des cinquième et sixième circuits (5, 6), ces cinquième et sixième circuits (5, 6) comportant respectivement une autre entrée binaire (52, 62) recevant respectivement les premier et second signes ($A_1$, $A_2$) du second alphabet, ainsi que, respectivement une sortie binaire (54, 64) pour chacun des premier et second signes (71, 72) du premier alphabet, en ce que le quatrième circuit (4) forme, à partir de chacun des troisièmes signes du second alphabet appliqués à son entrée (6), le plus grand multiple de 5 et l'applique au cinquième circuit (5) de même qu'il applique le reste au sixième circuit (6), et en ce que le cinquième et le sixième circuits additionnent, à chacun des premier et des second signes ($A_1$, $A_2$) du second alphabet appliqués respectivement à leurs entrées (52, 62), un multiple correspondant au reste ou au plus grand multiple correspondant de 26 et délivrent la somme résultante en tant que premier et second signes ($Z_1$, $Z_2$) du premier alphabet à leurs sorties (54, 64).

6. Appareil selon la revendication 4, caractérisé en ce que le premier et le second circuits (1, 2) forment le plus grand multiple de 26 par une soustraction itérative du nombre 26.

7. Appareil selon la revendication 5, caractérisé en ce que le quatrième circuit (4) forme le plus grand multiple entier de 5 par une soustraction itérative du nombre 5.

8. Appareil selon la revendication 6, caractérisé en ce que le premier et le second circuits (1, 2) comprennent respectivement une mémoire (11, 21) pour conserver le premier et le second signes ($Z_1$, $Z_2$) du premier alphabet, un circuit (12, 22) pour former la différence entre le contenu de la mémoire et 26, un circuit (13, 23) pour vérifier le signe de cette différence et pour engendrer un signal quand le signe de cette différence est positif et un circuit (14, 15, 24, 25) qui n'est activé par le circuit de vérification que quand ledit signe est positif afin de diminuer le contenu de la mémoire de 26.

9. Appareil selon la revendication 7, caractérisé en ce que la quatrième circuit (4) comprend une mémoire (41) pour le troisième signe ($A_3$) du second alphabet, un circuit commutable (42) pour former les différences entre le contenu de la mémoire et 5 ou 1, un circuit (43) pour vérifier le signe de cette différence et pour engendrer un premier ou un second signal en présence d'un signe positif, un circuit (44, 45, 49) qui n'est activé par le circuit de vérification que quand le signe est positif afin de diminuer le contenu de la mémoire de 5 ou de 1, et un circuit (44, 45) activé par le circuit de vérification du signe seulement lorsque le signe est négatif afin de commuter le circuit de formation de différence (42) de la soustraction de 5 à la soustraction de 1.

Fig.1

Fig.2

0 002 478